# EUROPÄISCHE PATENTSCHRIFT

(11) **EP 0 845 345 B1**
(45) Veröffentlichungstag und Bekanntmachung des Hinweises auf die Patenterteilung: **23.01.2002**
(21) Anmeldenummer: 97118300.9
(22) Anmeldetag: 22.10.1997
(51) Int. Cl.: B29C 45/27

(54) **Verbindungsanordung für Schmelzkanalabschnitte in Heisskanälen**
Connecting device for melt channel segments in hot runner channels
Dispositif de connexion pour tronçons de canal pour matière fondue dans des canaux chauds

(30) Priorität: 29.11.1996 DE 19649621
(43) Veröffentlichungstag der Anmeldung: 03.06.1998
(73) Patentinhaber: EWIKON Heisskanalsysteme GmbH & CO. Kommanditgesellschaft, D-32278 Kirchlengern (DE)
(72) Erfinder: Braun, Peter, Dr., 35410 Hungen (DE)
(74) Vertreter: Stracke, Alexander, Dipl.-Ing.

(56) Entgegenhaltungen:
- EP-A- 0 523 549
- EP-A- 0 630 733
- DE-A- 3 211 342
- US-A- 4 609 138
- H. GOLDBACH: "Heisskanal-Werkzeuge für die Verarbeitung "technischer" Thermoplaste" PLASTVERARBEITER., Bd. 29, Nr. 12, Dezember 1978, SPEYER/RHEIN DE, Seiten 677-682, XP002054208

## Beschreibung

Die Erfindung betrifft eine Verbindungsanordnung mit einem winkelförmigen oder T-förmigen Kanal, angeordnet zwischen einem horizontalen und einem vertikalen Verteilungskanal für die Schmelze eines Heißkanalverteilers.

Es gibt zahlreiche Lösungen im Stand der Technik, eine solche Verbindungsanordnung zu realisieren. Im Rahmen dieser Erfindung interessieren insbesondere solche, bei denen fluchtende und/oder winklig zueinander verlaufende Schmelzkanalabschnitte eines Heißkanals dichtend miteinander zu verbinden sind.

Einen solchen Einsatz zeigt z. B. die EP 0 226 798 A1.

Derart nach dem Stand der Technik gestaltete Verbindungsdanordnungen haben den Nachteil, daß ein Ende des Schmelzkanalabschnittes, z. B. die Einlaß- oder Auslaßöffnung für die Schmelze in der planen Stirnfläche ausgebildet sind, während das zweite Ende auf der zylindrischen Fläche austritt. Es ist im Rahmen der Erfindung unerheblich, an welchem Ende des Kanals der Verbindungsanordnung die Schmelze ein- oder austritt. In allen Teilen der nachfolgenden Beschreibung wird vereinfachend davon ausgegangen, daß die Schmelze in der Stirnfläche ein- und an einer oder mehreren Stellen der Mantelfläche austritt. Die Ausführungen nach dem Stand der Technik haben gezeigt, daß es möglich ist, die planen, korrespondierenden Stirnflächen zwischen der Verbindungsanordnung und dem Heißkanalverteiler entsprechend abzudichten, in dem die Verbindungsanordnungen mittels Gewindevorrichtungen fest gegen die Gehäuse verspannt werden. Derartige Gewindevorrichtungen wirken jedoch nur in einer Richtung, so daß die zylindrischen Außenflächen der Verbindungsanordnung hinsichtlich ihrer Dichtigkeit allein von der Qualität der Passung zwischen beiden Teilen bestimmt werden, wobei zu berücksichtigen ist, daß die Einsätze zu Reinigungszwecken einfach wieder entfernbar sein müssen, so daß die Passung entsprechend gestaltet sein muß.

Aus der EP-A-0 630 733 ist eine Verbindungsanordnung mit einem Verbindungsstück, welches mit einem winkelförmigen Kanal ausgerüstet ist, bekannt, wobei hier das Verbindungstück zu einem Kanal des Heißkanalwerkzeuges durch einen Stift ausgerichtet wird. Das Verbindungsstück soll in eine entsprechende Aufnahme des Heißkanalwerkzeuges so eingepaßt sein, daß Leckagen vermieden werden.

Aus der EP-A-0 523 549 ist eine ähnliche Konstruktion bekannt, bei der ein Verbindungsstück mit einem winkelförmigen oder einem T-förmigen Kanal zwischen einem horizontalen und einem vertikalen Verteilungskanal für die Schmelze eines Heißkanalspritzgießwerkzeuges angeordnet wird. Dabei soll das Verbindungsstück wiederum über einen Stift zum Heißkanalwerkzeug ausgerichtet und in eine entsprechende Aufnahme des Heißkanalwerkzeuges eingepaßt sein.

In der DE 32 11 342 A wird eine Spritzgießanlage mit einem Heißkanalverteiler beschrieben, jedoch werden hier Verbindungsanordnungen, die mit einem winkelförmigen oder einem T-förmigen Kanal ausgerüstet sind, weder in den Zeichnungen dargestellt noch in der Beschreibung erwähnt.

Die Erfindung hat sich die Aufgabe gestellt, den oben beschrieben Mißstand zu beseitigen und eine Verbindungsanordnung zu schaffen, die sowohl an der Stirnseite als auch an der Mantelfläche mit ausreichender Flächenpressung im benachbarten Teil anliegt, um eine zuverlässige Dichtung gegenüber dem hohen Schmelzedruck zu erreichen.

Diese Aufgabe wird erfindungsgemäß dadurch gelöst, daß die mit Kanalöffnungen versehenen Flächen der Verbindungsanordnung unter der Wirkung eines Spannmittels an den zugeordneten Flächen des Heißkanalverteilers oder einer Spannhülse unter Flächenpressung dichtend anliegen.

Zweckmäßige Weiterbildungen der Erfindung sind Gegenstand der abhängigen Ansprüche. Im folgenden wird die Erfindung anhand von mehreren in den Zeichnungen dargestellten Ausführungsformen beschrieben und erläutert.

Es zeigen:
- Figur 1: einen Heißkanalverteiler teilweise im Schnitt,
- Figur 2: eine Schnittdarstellung durch einen Heißkanalverteiler gemäß Figur 1 nach der Linie II-II,
- Figur 3: eine Verbindungsanordnung mit vorgefertigtem unvollständigen Schmelzekanal,
- Figur 4: das linke Ende eines Heißkanalverteilers mit einer abgewandelten Ausführungsform,
- Figur 5: einen Teilbereich eines Heißkanalverteilers mit einer weiteren Ausführungsform mit mehreren Einlaß- und/oder Auslaßöffnungen,
- Figur 6: zeigt ein weiteres Ausführungsbeispiel eines Heißkanalverteilers, teilweise im Schnitt mit unterschiedlichen Ausführungsformen,
- Figur 7: zeigt die perspektivische Ansicht eines Druckstückes (52),
- Figur 8: zeigt im Schnitt den rechten Endbereich eines Heißkanalverteilers nach einem anderen Ausführungsbeispiel,
- Figur 9: eine Draufsicht des Ausführungsbeispiels gemäß Figur 8,
- Figur 9a: die perspektivische Ansicht eines Spannstiftes,
- Figur 10: ein weiteres Ausführungsbeispiel mit separaten Spannmitteln.

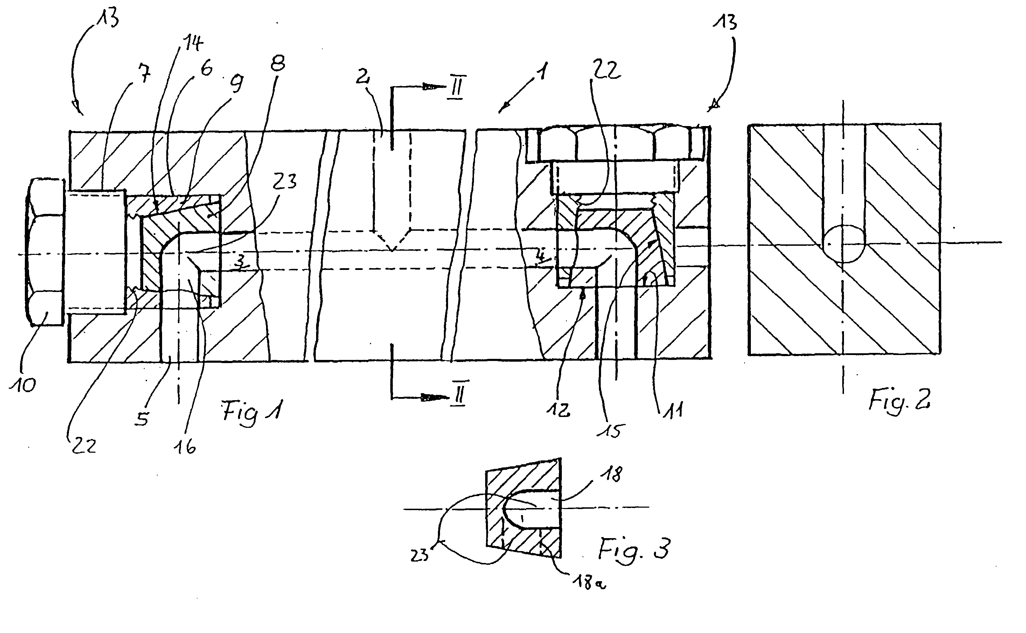

Figur 1 zeigt einen Heißkanalverteiler (1), der einen Einfüllkanal (2) besitzt, der in die Verteilungskanäle (3, 4) mündet. Im Endbereich (13) des Heißkanalverteilers (1) werden die Verteilungskanäle (3, 4) ihrerseits in den Verbindungsanordnungen (8) umgelenkt, in dem beschriebenen Ausführungsbeispiel, in parallel zum Einführungskanal (2) verlaufende Austrittsöffnungen (5). Die eigentliche Verbindung erfolgt in der Verbindungsanordnung (8), die eine an der Planfläche (11) des Heißkanalverteilers anliegende Planfläche (12) besitzt.

Die Verbindungsanordnung (8) gemäß. Fig.1 besitzt eine konische Mantelfläche (14) und ist von einer Zwischenhülse (9) umgeben, die eine konische Bohrung (15) aufweist, wobei sich die Konizitäten entsprechen.

Die Wandstärke der konischen Zwischenhülse (9) ist rel. dünn. Hierdurch ist sie rel. nachgiebig und kann so gleichzeitig die Aufgabe übernehmen, die Planflächen (11,12) zu verpressen, als auch sich elastisch verformbar unter Flächenpressung zwischen den Außenmantel der Verbindungsanordnung und der Wandung der Bohrung (6) zu legen. Auf diese Weise kann durch Anziehen der Anpreßschraube (10) in beide kritischen Richtungen eine dichtende Flächenpressung erzeugt werden. Es liegt auch im Rahmen der Erfindung, daß die Verbindungsanordnung (8) und/oder die Zwischenhülse (9) als Normteile ohne die Ausnehmungen (16) zur Verfügung stehen wohl aber mit der konzentrischen Ausnehmung (18) gemäß Fig. 3. In diesem Fall werden die Einzelteile montiert und die Ausnehmungen (16,17) durch die Austrittsöffnung (5) eingebracht, z.B. durch Bohren oder Fräsen. In diesem Falle wird nach dem Entfernen von Verbindungsanordnung (8) und Zwischenhülse (9) z.B. zu Reinigungszwecken, die Verbindungsanordnung (8) nicht wieder verwendet, sondern neue eingesetzt, um die Abschnitte Austrittsöffung (5) und Ausnehmungen (16) versatzfrei zu gestalten.
In Fig. 1 ist auf der rechten, dem Verteilungskanal (4) zugewandten Ende des Heißkanalverteilers (1) dargestellt, daß die Verbindungsanordnung auch so eingesetzt werden kann, daß die Schmelze an der Mantelfläche eintritt.

Die Verbindungsanordnungen und / oder Hülsen können mit Gewinde (22) odgl. versehen werden um diese mittels Ausziehvorrichtungen odgl. aus dem Gehäuse des Heißkanales herausziehen zu können.

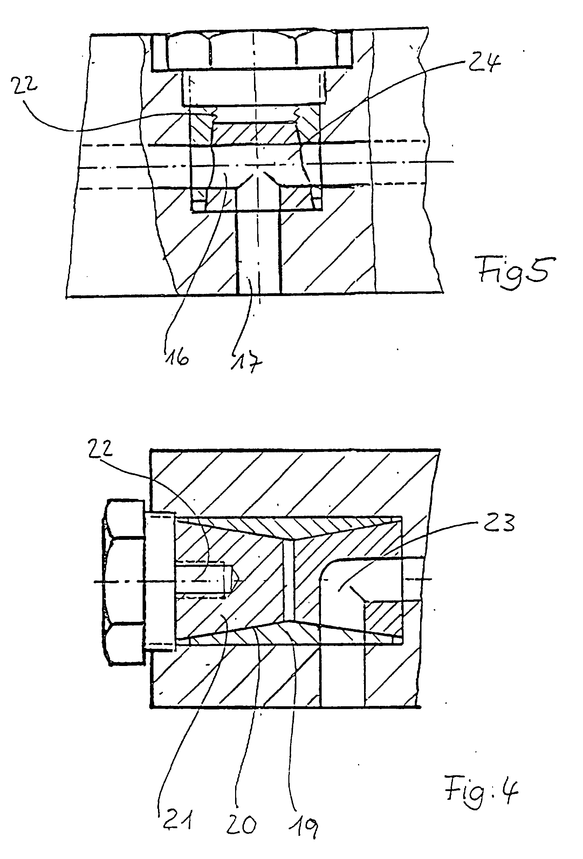

Fig. 4 zeigt ein Ausführungsbeispiel bei dem die Hülse gemäß Fig. 1 mit einem Doppelkonus (20) ausgestattet ist wobei in den Doppelkonus (20) ein Konus (21) unter der Wirkung eines Spannmittels, hier eine Schraube, die die Hülse (19) in den Heißkanalverteiler pressen, wobei die Dichtwirkung der Beschreibung des Ausführungsbeispieles nach Fig.1 entspricht, infolge des Doppelkonus jedoch eine zusätzliche radiale Abdichtung erreicht wird.

Fig. 5 zeigt eine Verbindungsvorrichtung, bei der die Ausnehmungen (16,17) nicht nur winkelförmig verlaufen, sondern die Form eines "T" aufweisen und so mehrfach mehrfach verwinkelt ist. Der in Fig. 5 dargestellte, horizontal verlaufende Kanal (24) muß nicht wie dargestellt fluchtend ausgebildet sein sondern kann auch aus winklig zueinander stehenden Abschnitten bestehen.

Fig. 3 zeigt eine Verbindungsanordnung mit vorgefertigtem Abschnitt (18) des Kanals (23). Der gestrichelt angedeutete Abschnitt (18a) wird nach der Montage in das Heißkanalverteilergehäuse durch Fräsen oder Bohren hergestellt.

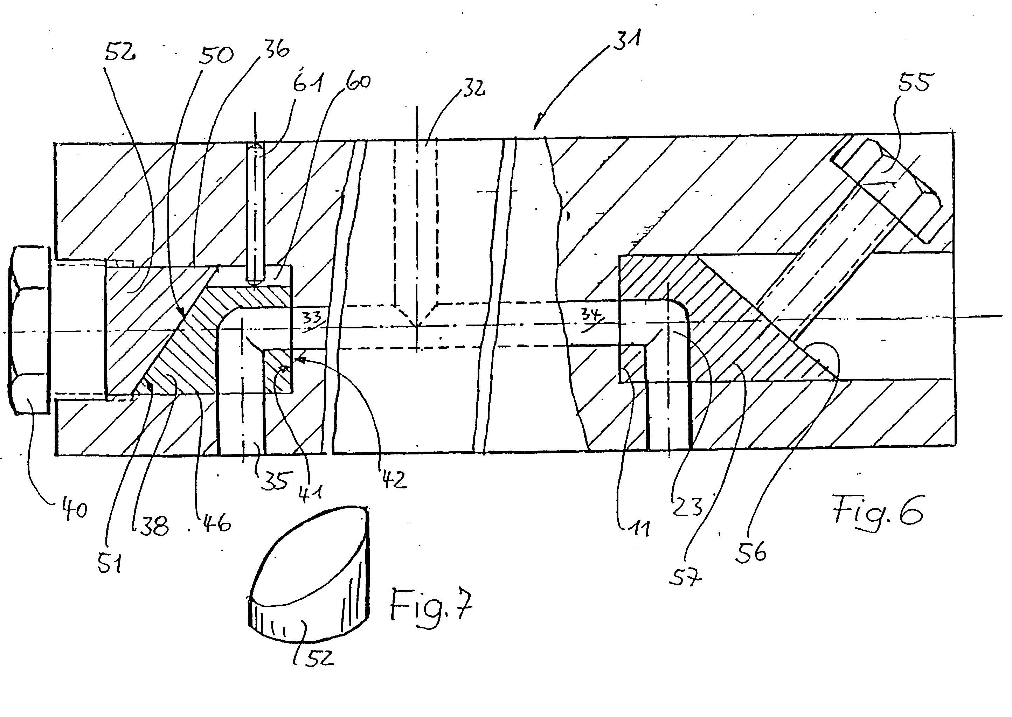

Fig. 6 zeigt zwei weitere Ausführungsbeispiele der Erfindung. Sie zeigt einen Heißkanalverteiler (31), der ebenfalls mit einem Einfüllkanal (32) und Verteilungskanälen (33,34) versehen ist. Auf der linken Seite des Heißkanalverteilers ist eine Verbindungsanordnung (38) gezeigt, die einerseits eine Planfläche (42) aufweist, an der die Planfläche (41) des Heißkanalverteilers (31) anliegt. Gegenüber der Planfläche (42) besitzt die Verbindungsanordnung eine weitere Fläche (50), die ebenfalls plan ist, jedoch in einen spitzen Winkel zur Mittenachse der Verbindungsanordnung verläuft. Diese Fläche (50) bildet mit der Schräge (51) eines Druckstückes (52) einen Keil, der beim Anziehen der Anpreßschraube (40) die Verbindungsanordnung je nach Wahl des Winkels von Fläche (50) und Schräge (51) sowohl gegen die Planflächen (41), als auch gegen den der Austrittsöffnung (35) benachbarten Teil der Bohrungswand (46) drückt.

Auf der rechten Seite des Heißkanalverteilers (31) ist ein weiteres Ausführungsbeispiel dargestellt. Dieses stellt eine einfache, mit sehr geringen Aufwand realisierbare Eckumlenkung dar. Ein Druckmittel, z.B. eine Anpreßschraube (55), die vollständig in den Heißkanalverteiler (31) eingelassen sein kann, drückt direkt auf die schräge Stirnfläche (56) der Verbindungsanordnung (57).

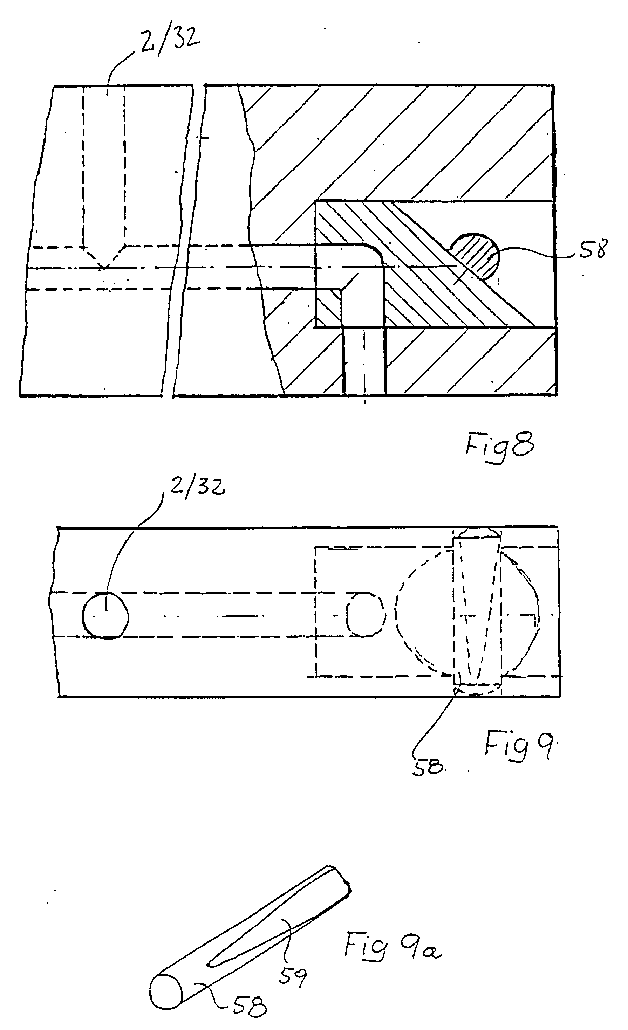

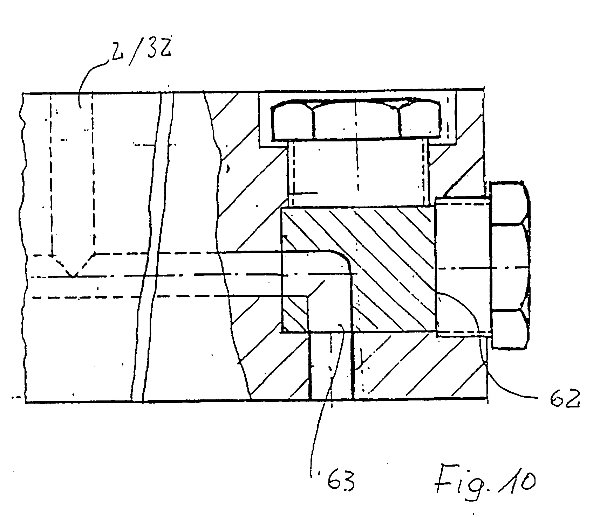

Anstelle der Anpreßschraube (55) ist es möglich, gemäß Fig. 8-9a einen Stift (58) mit einer Spannfläche (59) odgl. von der Seite einzutreiben, mit dem ebenfalls hohe Anpreßkräfte erzielbar sind.

Werden die Verbindungsanordnungen mit einer Ausnehmung (60) versehen, in die ein korrespondierender Vorsprung, z.B. ein Stift (61) eingreift, so können die Verbindungsanordnungen nach einer Demontage lagegenau wieder eingesetzt werden.

Es kann auch, wie in Fig. 10 dargestellt, sowohl ein auf die Stinseite (62) wirkendes Spannmittel, z.B. eine Schraube als auch ein Spannmittel auf die der Öffnung (56) gegenüberliegenden Seite der Umlenkvorrichtung eingesetzt werden.

## Patentansprüche

1. Verbindungsanordnung (8, 38, 57) mit einem winkelförmigen oder T-förmigen Kanal (16, 23, 24), angeordnet zwischen einem horizontalen (3, 4) und einem vertikalen Verteilungskanal (5) für die Schmelze eines Heißkanalverteilers (1, 31) **dadurch gekennzeichnet, daß** die mit Kanalöffnungen versehenen Flächen (12, 41) der Verbindungsanordnung (8, 38, 57) unter der Wirkung eines Spannmittels (9, 10; 9, 21; 52; 55; 58) an den zugeordneten Flächen (11, 42, 46) des Heißkanalverteilers (1, 31) oder einer Spannhülse (9, 19) unter Flächenpressung dichtend anliegen.

2. Verbindungsanordnung nach Anspruch 1, **gekennzeichnet durch** eine konische Mantelfläche (14), die von einer Zwischenhülse (9) mit einer konischen Bohrung (15) umgeben ist, wobei die Konizitäten einander entsprechend ausgebildet sind, und daß **durch** eine der Zwischenhülse (9) zugeordnete Anpreßschraube (10) die mit Kanalöffnungen versehenen Flächen (11,12) der Verbindungsanordnung (8) und des Heißkanalverteilers verpreßbar sind und die Zwischenhülse (9) elastisch verformbar zwischen einem Außenmantel der Verbindungsanordnung (8) und der Wandung einer Bohrung (6) des Heißkanalverteilers angeordnet ist.

3. Verbindungsanordnung nach Anspruch 1, **dadurch gekennzeichnet, daß** der Verbindungsanordnung eine als Doppelkonus ausgebildete Hülse (19) zugeordnet ist und die Hülse zusätzlich mit einem Konus (21) zusammenwirkt, dem ein Spannmittel zugeordnet ist.

4. Verbindungsanordnung nach Anspruch 3, **dadurch gekennzeichnet, daß** das Spannmittel als Schraube ausgebildet ist.

5. Verbindungsanordnung nach einem der vorhergehenden Ansprüche, **dadurch gekennzeichnet, daß** die Verbindungsanordnungen (8) und/oder Hülsen (9, 19) Gewindeabschnitte zum Ansetzen von Ausziehvorrichtungen aufweisen.

## Claims

1. Connecting arrangement (8, 38, 57) with an angular or T-shaped channel (16, 23, 24), arranged between a horizontal (3, 4) and a vertical distribution channel (5) for the melt of a hot channel distributor (1, 31), **characterised in that** the faces (12, 41) of the connecting arrangement (8, 38, 57) provided with channel apertures abut the associated faces (11, 42, 46) of the hot channel distributor (1, 31) or a fixing sleeve (9, 19) in a sealing manner under surface pressure and under the action of a fixing means (9, 10; 9, 21; 52; 55; 58).

2. Connecting arrangement according to claim 1, **characterised by** a conical external surface (14) which is surrounded by an intermediate sleeve (9) with a conical hole (15), wherein the conical forms are designed so as to correspond with one another, and in that owing to a pressure screw (10) associated with the intermediate sleeve (9) the faces (11, 12) of the connecting arrangement (8) provided with channel apertures and of the hot channel distributor can be compacted and the intermediate sleeve (9) is elastically deformable between an external jacket of the connecting arrangement (8) and the wall of a hole (6) of the hot channel distributor.

3. Connecting arrangement according to claim 1, **characterised in that** a sleeve (19) designed as a double cone is associated with the connecting arrangement and the sleeve additionally cooperates with a cone (21) with which a fixing means is associated.

4. Connecting arrangement according to claim 3, **characterised in that** the fixing means is designed as a screw.

5. Connecting arrangement according to any one of the preceding claims, **characterised in that** the connecting arrangements (8) and/or sleeves (9, 19) have threaded portions for the application of withdrawal devices.

## Revendications

1. Dispositif de connexion (8, 38, 57) comprenant un canal (16, 23, 24) angulaire ou en forme de T, situé entre un canal de distribution horizontal (3, 4) et un canal de distribution vertical (5) destinés à la masse fondue d'un distributeur à canal chaud (1, 31), **caractérisé en ce que** les surfaces (12, 41) du dispositif de connexion (8, 38, 57) qui sont pourvues d'ouvertures de canaux, sous l'action d'un moyen de serrage (9, 10 ; 9, 21 ; 52 ; 55 ; 58), sont appliquées de façon étanche contre les surfaces associées (11, 42, 46) du distributeur à canal chaud (1, 31) ou d'un manchon de serrage (9, 19), avec compression des surfaces.

2. Dispositif de connexion selon la revendication 1, **caractérisé par** une surface latérale (14) conique, qui est entourée par un manchon intermédiaire (9) présentant un perçage conique (15), les conicités se correspondant, et en ce que, grâce à une vis de serrage (10) associée au manchon intermédiaire (9), les surfaces (11, 12) du dispositif de connexion (8) qui sont pourvues d'ouvertures de canaux, et du distributeur à canal chaud, sont susceptibles d'être comprimées, et le manchon intermédiaire (9) est monté avec possibilité de déformation élastique entre une enveloppe extérieure du dispositif de connexion (8) et la paroi d'un perçage (6) du distributeur à canal chaud.

3. Dispositif de connexion selon la revendication 1, **caractérisé en ce qu'**est associé au dispositif de connexion un manchon (19) conformé en double cône et **en ce que** le manchon coopère, en outre, avec un cône (21) auquel est associé un moyen de serrage.

4. Dispositif de connexion selon la revendication 3, **caractérisé en ce que** le moyen de serrage est conformé en vis de serrage.

5. Dispositif de connexion selon l'une des revendications précédentes, **caractérisé en ce que** les dispositifs de connexion (8) et/ou les manchons (9, 19) présentent des tronçons filetés permettant de monter des appareils de démoulage.
